# EUROPEAN PATENT APPLICATION

(11) **EP 4 797 860 A1**
(43) Date of publication of application: **26.08.2026**
(21) Application number: 25159933.8
(22) Date of filing: 25.02.2025
(51) Int. Cl.: H04W 76/12, G06N 20/00, G06N 3/098, H04W 8/24, H04W 28/02, H04L 41/16, H04W 4/24

(54) **METHOD FOR USING A USER EQUIPMENT WITH A MOBILE COMMUNICATION NETWORK AND/OR FOR TRANSMITTING DATA ON, OR USING, AN ADDITIONAL COMMUNICATION PLANE BESIDES THE CONTROL PLANE AND THE USER PLANE, USER EQUIPMENT, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for using a user equipment with a mobile communication network and/or for transmitting data on, or using, an additional communication plane besides the user plane and the control plane, wherein the mobile communication network comprises a radio access network comprising at least one base station entity serving the user equipment, and wherein the user equipment indicates, to the mobile communication network and/or to the at least one base station entity, the transmission of data or the intended transmission of data on, or using, the additional communication plane, this transmission or intended transmission of data being in uplink direction, from the user equipment towards the mobile communication network, wherein the method comprises the step of the user equipment transmitting an indication information that specifies, relates to, or indicates the use of, the additional communication plane, wherein the indication information is part of, or carried by, at least one medium access control sub protocol data unit, MAC subPDU, and/or at least one medium access control, MAC, control element and/or at least one medium access control, MAC, subheader.

## Description

### BACKGROUND

The present invention relates a method for using a user equipment with a mobile communication network and/or for transmitting data on, or using, an additional communication plane besides the control plane and the user plane.

Furthermore, the present invention relates to a user equipment for being used with a mobile communication network and/or for transmitting data on, or using, an additional communication plane besides the control plane and the user plane.

Additionally, the present invention relates to a system or mobile communication network for using a user equipment with the mobile communication network and/or for transmitting data on, or using, an additional communication plane besides the control plane and the user plane.

Furthermore, the present invention relates to a program and to a computer-readable medium for using a user equipment with a mobile communication network and/or for transmitting data on, or using, an additional communication plane besides the control plane and the user plane according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G/or next radio access technologies (referring to the different generations of radio access technologies) and typically comprise (or consist of) cells (or radio cells) of one or a plurality of the respective radio access technology/radio access technologies.

In cellular mobile networks according different generations of radio access technologies (e.g. in all of GSM (2G), UMTS (3G), LTE (4G) and 5G), the air interface consists of two logical "planes", or "communication planes" to transmit data: the control plane and the user plane. The control plane (or control-plane) is, e.g., responsible for carrying messages to setup and maintain the communication of a user equipment with the network, such as carrying, or transporting, the messages related to the radio resource control, RRC, protocol) and the user plane (or user-plane) is carrying, or transporting, the user data. These "planes" typically provide both uplink and downlink directions for UL/DL traffic (i.e. data to be transmitted) of the respective control- or user-plane. Such data are typically transmitted using specific channels (e.g. logical channels and/or transport channels and/or physical channels), and such different channels are either associated to (or part of) the control plane (also called control channels), or, alternatively, associated to (or part of) to the user plane (also called user plane channels or traffic channels). A given channel (for transmitting data (or traffic) that is either considered control plane data or user plane data) is, thus, not (or cannot be) part of both the control plane and the user plane, i.e. the two planes are separated which is sometimes also known "as control and user plane separation" (CUPS). CUPS leads to better scalability and performance and provides the possibility that control plane specifications and user plane specifications can evolve independently.

However, even though the differentiation between control plane (data, traffic and/or channels) and user plane (data, traffic and/or channels) is known since a considerable time, "inconsistencies" have been present (of the sort that specific data or categories thereof would have to be called user (plane) data (and specifically not control (plane) data) - e.g. due to the fact that such data is user-initiated and user-defined - but are nevertheless carried (or transported) using control plane mechanisms, especially control plane channels): E.g., already starting in GSM time, the control plane over the air interface was (and is) used - at least also used - to carry data/messages/traffic which should actually, rather, be regarded as being a U-Plane service. The SMS (short message service) is the prominent example here, which is carried as Non-Access Stratum (NAS) message over the control channels (i.e. using the control plane, or control plane channels) - even though an SMS message is typically (or predominantly at least) user-initiated and user-determined, thus rather relating to user plane data or traffic.

Each generation of cellular technologies had their specific (transmission) channels for the control plane and the user plane. For example, in UMTS (3G), multiple control plane channels were introduced, the so-called signaling radio bearers (SRB). There were multiple ones defined to carry access stratum (AS) signaling such as RRC messages and also different ones for non-access stratum (NAS) signaling. They differentiated by the security mechanisms and the achievable data rates, e.g. ranging from 3.4 kbps to 13.6 kbps.

Also with LTE (4G) radio access technology, this differentiation between the control plane and user plane - in the sense of control plane channels, being opposed to, or different from, user plane channels - was maintained. This is not in contradiction to somehow softening, in LTE, the distinction regarding how such (clearly: different - control/user plane) channels are transported: E.g., LTE (in contrast to UMTS) was designed around uplink and downlink shared channels to flexibly carrying data, and, instead of relying heavily on dedicated control channels, common control channels were more and more used.

Another example of softening the clear-cut differentiation between the usage of control plane channels and user plane channels was the feature of minimization of drive test (MDT) in 3GPP Rel-10, where the user equipment collects radiofrequency parameters - such as serving and neighboring cell measurements - in an internal memory and can transfer this information to the network if instructed to do so. It could be debated if this MDT data, which also typically exceeds the volume of classical control plane messages, should really be considered as being "control data", however, it is clearly not user plane, and is, thus, transported using radio resource control messages - i.e. control plane channels, or belonging to the control plane.

Thus, in all current cellular systems and mobile communication networks, the control plane channels and user plane channels (C- and U-Plane channels) differentiate in terms of termination, security and data rate. A further differentiating factor - which lead to the decision to carry MDT data on the control plane - is the fact that any user plane traffic is (or should be) subject to charging to the end-customer.
However - and despite the examples of SMS and MDT mentioned - the dichotomy of having, or implementing, a control plane on the one hand, and a user plane on the other hand, are maintained in all conventionally known mobile communication networks and radio access technologies.

It would be desirable to be able to treat specific categories of data or specific categories of traffic more appropriately, especially in a manner more adapted to the underlying communication purpose (of these specific data or traffic, respectively) and/or more adapted to specific constraints of the associated transport of such data or traffic, especially regarding bandwidth availability, latency constraints, (green) energy-related availability, charging aspects and/or volume of the data or traffic.

### SUMMARY

An object of the present invention is to provide a technically simple, effective, cost-effective, adapted, and customizable solution for using a user equipment with a mobile communication network and/or for transmitting data on, or using, an additional communication plane besides the control plane and the user plane by means of an indication - transmitted by the user equipment to the mobile communication network and/or to the at least one base station entity - indicating either the transmission of data or the intended transmission of data on, or using, the additional communication plane. A further object of the present invention is to provide a corresponding user equipment, a corresponding system or mobile communication network, and a corresponding program and computer-readable medium.

The object of the present invention is achieved by a method for using a user equipment with a mobile communication network and/or for transmitting data on, or using, an additional communication plane besides the control plane and the user plane, wherein the mobile communication network comprises a radio access network comprising at least one base station entity serving the user equipment, and wherein the user equipment indicates, to the mobile communication network and/or to the at least one base station entity, the transmission of data or the intended transmission of data on, or using, the additional communication plane, this transmission or intended transmission of data being in uplink direction, from the user equipment towards the mobile communication network, wherein the method comprises the step of the user equipment transmitting an indication information that specifies, relates to, or indicates the use of, the additional communication plane, wherein the indication information is part of, or carried by, at least one medium access control sub protocol data unit, MAC subPDU, and/or at least one medium access control, MAC, control element and/or at least one medium access control, MAC, subheader.

It is thereby advantageously possible according to the present invention to realize and enable a more adapted, a more customized, and a more appropriate way of using a user equipment with the mobile communication network using the additional communication plane for specific data or for a specific category of data. Especially the additional communication plane is, or corresponds to, an artificial intelligence/machine-learning plane. Alternatively, the additional communication plane might be a service plane. Especially, not only one additional communication plane is indicated, by the user equipment, but, e.g., two (or more) additional communication planes (i.e., besides the additional communication plane, a further additional communication plane) such that the additional communication plane might correspond to the artificial intelligence/machine-learning plane, and the further additional communication plane might correspond to the service plane.

According to the present invention, the additional communication plane (or: the artificial intelligence/machine-learning plane or the service plane) - or its use - is indicated, by the user equipment, to the mobile communication network and/or to the at least one base station entity by means of the indication information. Hence, the indication information is specific to (or: specifies unambiguously) the (use of the) additional communication plane.
Due to the air interface - in a typical mobile communication network - between the user equipment and its serving base station or plurality thereof, any information or data transmitted by the user equipment (i.e. in uplink direction) - and, hence, also the indication information - necessarily (and "physically") needs to be sent to (or needs to arrive at) the serving base station entity (first). In case the respective base station entity is the intended recipient (i.e. in case of the indication information being part of an access stratum, AS, communication), the transmitted information or data, and especially the indication information, is transmitted to, and received by, the respective base station entity. Otherwise, in case another entity (especially a network function or service) of the core network of the mobile communication network is the intended recipient (i.e. in case of the indication information being part of a non-access stratum, NAS, communication), the transmitted information or data, and especially the indication information, is also transmitted to, and (at least "physically") received by, the respective base station entity, but perhaps not logically received by the respective base station entity but (forwarded or otherwise transmitted by the respective base station entity to another entity or network function or service and, thus, received) by another entity or network function or service of the core network.

Furthermore, according to a first group of embodiments of the present invention, the transmission on (or the use of) the additional communication plane is indicated, by the user equipment (and, of course, to the mobile communication network and/or to the at least one base station entity), regarding a transmission of data (i.e. a transmission of data that is imminent or that is currently occurring).
According to a second group of embodiments of the present invention, the transmission on (or the use of) the additional communication plane is indicated, by the user equipment (and, of course, to the mobile communication network and/or to the at least one base station entity), regarding an intended transmission of data (i.e. a transmission of data that the user equipment (by means of the indication information, and, of course, to the network or serving base station entity) indicates, or flags, such that (especially by means of the indication information being a buffer indication) this transmission of data should happen later).
Hence, the indication information typically corresponds to an information element that indicates (according to the first group of embodiments of the present invention) the current use of the additional communication plane, or, alternatively, that indicates (according to the second group of embodiments of the present invention) the future (or subsequent or following) use of the additional communication plane.

According to the present invention, the indication information (transmitted by the user equipment) specifies, relates to, or indicates the use of, the additional communication plane and the indication information is part of, or carried by, at least one medium access control sub protocol data unit, MAC subPDU, and/or at least one medium access control, MAC, control element and/or at least one medium access control, MAC, subheader.
Typically, the communication on the air interface between the user equipment and its (serving) base station entity occurs - in uplink direction - by means of the user equipment transmitting so-called transport blocks or MAC PDUs (MAC protocol data units), i.e. chunks (or packets) of data transmitted on (or relating to) the MAC layer of the respective considered radio access technology protocol stack. The MAC layer provides services to the upper layers (especially the so-called RLC layer - radio link control layer) and it expects some services from the layer below the MAC layer, i.e. the PHY layer (physical layer). The physical layer offers transport channels to the MAC layer, and the MAC layer offers logical channels to the RLC layer or sublayer. Especially, the MAC layer is the interface between logical channels and physical layer transport channels as it provides the mapping between logical and transport channels (both in uplink and downlink direction).
A MAC PDU consists of one or more MAC sub-PDUs. Different types of such a MAC sub-PDU are possible (e.g.: MAC subheader only, including padding; MAC subheader and MAC SDU (MAC service data unit); or MAC subheader and MAC CE (MAC control element)) but - irrespective of its type - a MAC sub-PDU always comprises at least a MAC subheader and/or a MAC control element; typically a MAC sub-PDU comprises a subheader and might additionally comprise a MAC CE (MAC control element).
Thus the transport blocks (or MAC PDUs) - as well as the MAC sub-PDUs - transmitted by the user equipment correspond to, or comprise, data packets that each one typically comprises a chunk of payload data as well as a header portion or header information. Especially this header portion is used, by the serving base station entity, for internal prioritization, routing, as well as the charging or charging avoidance handling. Accorrding to the present invention, it is thus advantageously possible to treat specific (different) categories of data or specific (different) categories of traffic more appropriately, especially in a manner more adapted to their underlying differences in communication purpose (of these specific data or traffic, respectively) and/or more adapted to specific constraints of the associated transport of such data or traffic, especially regarding bandwidth availability, latency constraints, (green) energy-related availability, charging aspects and/or volume of the data or traffic.
According to an example relating catering for such differences related to charging, by means of the indication information being part of, or carried by, at least one medium access control sub protocol data unit, MAC subPDU, and/or at least one medium access control, MAC, control element and/or at least one medium access control, MAC, subheader, it is possible, according to the present invention that transport blocks or MAC sub-PDUs of the control plane and of the artificial intelligence/machine-learning plane are not counted for customer charging, whereas user plane transport blocks or MAC sub-PDUs go into the counting for customer charging; especially, service plane transport blocks or MAC sub-PDUs could go into a differentiated charging mechanism (e.g charging the events of receiving service plane transports blocks or MAC sub-PDUs rather than the data volume of the respective transport block or MAC sub-PDU).

According to the present invention, the use of the additional communication plane (or additionally, of the further additional communication plane) preferably (but not necessarily) occurs, or is implemented, by using logical, transport and/or physical channels that might be specific to the respective additional (or further additional) communication plane, e.g. specific to using the artificial intelligence/machine-learning (communication) plane and/or to using the service (communication) plane.

Furthermore according to all embodiments of the present invention, the data (or traffic) to be transmitted using the additional communication plane (or the further additional communication plane) might be transmitted using (especially: logical) channels that are specifically designated channels, i.e. associated to the additional communication plane or to the further additional communication plane, respectively, in the sense that such specifically designated channels are neither control plane channels, nor (strictly, or conventional) user plane channels. If such a use of specifically designated, or associated, channels (for each of the additional communication plane, respectively) is the case or implemented, then, of course, the wording "the transmission of data or the intended transmission of data on, or using, the additional (or further additional) communication plane" means that the respective specifically designated channel is used regarding the considered traffic or transmission of data.
Otherwise, in case that no such specifically designated channels are defined (i.e. associated to the use of the additional communication plane or to the further additional communication plane, respectively, in the sense that such specifically designated channels are neither control plane channels, nor (strictly, or conventional) user plane channels), the data (or traffic) to be transmitted using the additional communication plane (or using the further additional communication plane) might also be transmitted using (especially: logical) channels that could be labelled as traffic channels (that conventionally were associated (solely) to the user plane), which traffic channels are able to carry user plane data (or traffic) as well as data (or traffic) related to the additional communication plane and/or the further additional communication plane. In this case (of no specifically designated channels being defined for the additional communication plane), two pieces of payload data (i.e. chunks of data to be transmitted, especially (but not necessarily) in uplink direction) - where one such piece belongs to the user plane and the other such piece belongs to the additional communication plane - are transmitted using the same (especially logical) channel - such channel especially being called a "traffic channel" - but nevertheless treated differently in at least one respect, e.g. regarding charging and/or regarding latency, etc., amounting to being able to apply a more appropriate handling, respectively, of the considered two pieces of payload data.

Hence, according to the present invention - and irrespective of whether a specifically designated channel (or a plurality thereof) is/are used for the additional communication plane(s), or whether no such specifically designated channel is defined and data of the additional communication plane(s) is transmitted using a conventional (or newly defined) traffic channel - it is advantageously possible to use the additional communication plane (or additionally, the further additional communication plane) to provide for a more adapted and a more appropriate handling of different communication requirements or communication demands of the user equipment.
The conventionally known dichotomy regarding the use of either the control plane and or the user plane is not able to properly cater for the communication needs of user equipments as well as of other network entities, especially with regard to artificial intelligence/machine-learning, novel service events and the like.
In this context, with the advent of artificial intelligence/machine-learning data to be transmitted and processed, the conventionally known approach (i.e. only knowing the control plane and the user plane) especially becomes a problem if data amounts - similar to MDT, i.e. that are transmitted (or need to be transmitted) by user equipments for the sake of network purposes, and precisely not for purposes of the considered user equipment itself - are not low or insignificant anymore, such as for "training data" for Al/ML (artificial intelligence/machine-learning) which is continuously and widely needed in order to have access to new or fresh data (like RF measurements) that are needed to train and continuously improve the AI/ML algorithms. The amounts of data involved here easily go in the MB (Megabytes) range if not in the GB (Gigabytes) range depending on the use case of Al/ML for a particular user equipment and/or network application. In this case, such data would need to be sent over (or using) the control plane in order to avoid charging the customer for data volume that is not consumed; however, the problem remains the limited capacity of the control plane channels as they were not designed to carry huge amounts of data (compared to the user plane). The alternative to carry the training data on the user plane would require postprocessing of the fraction of the user (plane) data that has been transmitted, but not been caused (or requested) by the user or subscriber and which is, also, typically of very limited or no value to the user. Specific data volume counters in the network could solve the problem to subtract the AI/ML-related (and counted) data from the overall (e.g. monthly) contractual amount.

According to the present invention, one specific application of an additional communication plane (besides the control plane and the user plane solely present conventionally) is the use of the artificial intelligence/machine-learning (communication) plane. The data or traffic volumes to be transmitted on such an artificial intelligence/machine-learning plane, especially data of artificial intelligence/machine-learning applications or use cases that are related to network functionality or caused in view of network improvement (rather than initiated by a user), should not be charged to the user. However, as the data volumes involved might be comparable to the data volumes transmitted on the user plane, the control plane should not be used for such data, but rather the artificial intelligence/machine-learning (communication) plane. However, the transmission of data or traffic related to artificial intelligence/machine-learning is only an example of the benefits of using an additional communication plane, or the additional communication plane; another example is the use of a service (communication) plane (as either the additional communication plane (alone) or as the further additional communication plane (with the artificial intelligence/machine-learning (communication) plane as the additional communication plane)).

Hence, according to the present invention a flexible data transfer is enabled between the user equipment and the mobile communication network, distinguishing between different (communication) planes, while flexibly using the shared channel approach, especially even more intensively than it is implemented in 5G systems. Exemplarily, a mobile communication network might provide support for two additional (communication) planes (in addition to the two conventionally known (communication) planes, control plane and user plane), namely the artificial intelligence/machine-learning (AI/ML) plane (as the additional communication plane) and the service plane (as the further additional communication plane).

According to the present invention, it is advantageously possible that every data transfer - in uplink direction but as well as in downlink direction - can be flexibly allocated to a respective (communication) plane. However, the use of the additional communication plane and/or the further additional communication plane does in no way exclude the classical fixed mapping of messages to the control plane.

According to the present invention, (communication) plane-individual indications (i.e. pieces of indication information that are specific to the additional communication plane) - especially (but not necessarily) of uplink data - to be provided over the air interface can be achieved, according to the present invention, by at least one of the following methods:
-- The use of the additional communication plane (in a data transmission currently occurring, i.e. relating to the above mentioned first group of embodiments of the present invention) can be indicated by each transport block or MAC sub-PDU indicating the associated communication plane to use, e.g. by means of a header field (for each transport block or MAC sub-PDU) consisting of (but not limited to) 2 bits to indicate the respective plane out of the four communication planes used according to the above mentioned example; so, the exemplary coding of the 2 bits header field ("[b1b0:otherHeader|TransportBlockDATA]") would be, e.g., "00" for indicating the control plane, "01" for indicating the user plane, "10" for indicating the artificial intelligence/machine-learning plane, and "11" for indicating the service plane. Alternatively or cumulatively (to indicating the associated communication plane to use by means of a header field (for each transport block or MAC sub-PDU) consisting of a number of bits to indicate the respective plane (e.g. out of four communication planes)), the associated communication plane to use can be indicated by means of (new) header indications based on LCID (logical channel ID) values; e.g. one LCID value (e.g. "37") could indicate the use of the additional communication plane (for example the artificial intelligence/machine-learning plane), whereas another LCID value (e.g. "38") could indicate the use of the further additional communication plane (for example the service plane).
-- The use of the additional communication plane (in an intended (or requested) data transmission, i.e. relating to the above mentioned second group of embodiments of the present invention) can be indicated by means of a communication plane-individual buffer status report, BSR, especially according to a buffer status reporting (BSR) procedure that is implemented in LTE and 5G NR and which is used to provide the serving base station entity (e.g. a gNodeB) with information about the uplink data volume in the MAC entity. Hence, according to the present invention, it is thereby advantageously possible - by means of the ((communication) plane-individual) indication information - to indicate a buffer status reporting that is (communication) plane-individual, i.e. individually per (communication) plane, beyond the user plane, also for the artificial intelligence/machine-learning plane and/or the service plane, and, especially for future flexibility, also to the control plane; one exemplary embodiment of this would be to, e.g., introduce four different buffers and respective buffer status report" (BSR) procedures, each individually indicating the current buffer status, e.g. using absolute values of buffer sizes, or an absolute value of the overall (or total) buffer size and the indication of relative values (or fractions) for the individual buffers associated to the different communication planes.

According to further embodiments of the present invention, it is possible and preferred that the additional communication plane is, or corresponds to, an artificial intelligence/machine-learning plane or is, or corresponds to, a service plane,
wherein especially, the transmission or the intended transmission of further data on, or using, a further additional communication plane - besides the additional communication plane and besides both the control and user plane - is indicated, by the user equipment, wherein the additional communication plane is, or corresponds to, the artificial intelligence/machine-learning plane and wherein the further additional communication plane is, or corresponds to, the service plane,
wherein especially, the user equipment transmits a further indication information that specifies, relates to, or indicates the use of, the further additional communication plane.

It is thereby advantageously possible - in case of only the additional communication plane being present - that, besides the control plane and the user plane, the artificial intelligence/machine-learning plane or the service plane is realized, or implemented, as the additional communication plane.
Furthermore and in case of both the additional communication plane as well as the further additional communication plane being present (besides the control plane and the user plane), e.g. the artificial intelligence/machine-learning plane is realized, or implemented, as the additional communication plane, and the service plane is realized, or implemented, as the further additional communication plane.

In case the further additional communication plane is present, the transmission - or, alternatively, the intended transmission - of the further (especially uplink) data (corresponding to or being transmitted using the further additional communication plane) are indicated, by the user equipment, by means of the further indication information (that specifies, relates to, or indicates the use of, the further additional communication plane).

In a further embodiment of the present invention (especially according to the first group of embodiments of the present invention), it is possible and preferred that the at least one serving base station entity indicates to the user equipment, the transmission of downlink data on, or using, the additional communication plane and/or on, or using, the further additional communication plane,
wherein the method comprises the further step of the at least one base station entity transmitting, and the user equipment receiving, a downlink indication information that specifies, relates to, or indicates the use of, the additional communication plane and/or a further downlink indication information that specifies, relates to, or indicates the use of, the further additional communication plane, wherein the downlink indication information and/or the further downlink indication information is part of, or carried by, at least one medium access control sub protocol data unit, MAC subPDU, and/or at least one medium access control, MAC, control element and/or at least one medium access control, MAC, subheader.

It is thereby advantageously possible that the method according to the present invention - while mainly being targeted to the uplink communication direction, i.e. relating to transmissions of the user equipment towards the serving base station entity - also relates to the downlink direction, i.e. that the base station entity indicates - to especially a considered one of the user equipments it is serving - the transmission of downlink data on, or using, the additional communication plane and/or on, or using, the further additional communication plane. Advantageously, this use of the additional and/or further additional communication plane is indicated by means of the downlink indication information (and/or the further downlink indication information) being part of at least one medium access control, MAC, control element or subheader.
Hence, it is possible and preferred according to the present invention, that a corresponding indication information - a downlink indication information - is transmitted by the base station entity (and received by the user equipment), and, thus, the indication of using the additional and/or further additional communication plane can consistently be used, or applied, also for the downlink (then the aspect of charging is not relevant as the network has all respective information already), especially in view of the user equipment-internal distribution of the received data (instead of data coming from the fixed mapping of respective user plane and control plane channels).

Still furthermore, it is also possible and preferred, according to the present invention (especially according to the first group of embodiments of the present invention), that the indication information that specifies, relates to, or indicates the use of, the additional communication plane and/or the further indication information that specifies, relates to, or indicates the use of, the further additional communication plane corresponds to at least one of the following:
-- an information element, specifically indicating the use of the additional communication plane, especially as a specific value of the possible values as part of a logical channel identifier information, LCID,
-- a further information element specifically indicating the use of the further additional communication plane, especially as a further specific value of the possible values as part of a logical channel identifier information, LCID,
-- an information element specifically indicating the use of either the control plane, the user plane, the additional communication plane, or the further additional communication plane, especially as part of a logical channel identifier information, LCID, and/or especially as a two bit indication, especially as part of a header part or of a subheader part or of a control element part of a medium access control sub protocol data unit, MAC subPDU.

Likewise, it is possible and preferred, according to the present invention (especially according to the first group of embodiments of the present invention), that the downlink indication information that specifies, relates to, or indicates the use of, the additional communication plane and/or the further downlink indication information that specifies, relates to, or indicates the use of, the further additional communication plane corresponds to at least one of the following:
-- a downlink information element, specifically indicating the use of the additional communication plane, especially as a specific value of the possible values as part of a logical channel identifier information, LCID,
-- a further downlink information element specifically indicating the use of the further additional communication plane, especially as a further specific value of the possible values as part of a logical channel identifier information, LCID,
-- a downlink information element specifically indicating the use of either the control plane, the user plane, the additional communication plane, or the further additional communication plane, especially as part of a logical channel identifier information, LCID, and/or especially as a two bit indication, especially as part of a header part or of a subheader part or of a control element part of a medium access control sub protocol data unit, MAC subPDU.

In both cases, i.e. in both communication directions, it is thereby advantageously possible that the use of the additional and/or further additional communication plane is specified or indicated in an efficient yet flexible manner.

Still furthermore, it is also possible and preferred, according to the present invention (especially according to the second group of embodiments of the present invention), that the user equipment indicates, to the at least one base station entity,
-- the intended transmission of data on, or using, the additional communication plane by means of transmitting the indication information that specifies, relates to, or indicates the use of, the additional communication plane, the indication information especially relating to the data volume or buffer size of the data intended to be transmitted by the user equipment, and/or
-- the intended transmission of further data on, or using, the further additional communication plane by means of transmitting the further indication information that specifies, relates to, or indicates the use of, the further additional communication plane, the further indication information especially relating to the data volume or buffer size of the further data intended to be transmitted by the user equipment.

Thereby, it is advantageously possible to efficiently indicate, to the serving base station entity, which kinds of data are (waiting) to be transmitted, by the respective user equipment.

Additionally, it is also possible and preferred, according to the present invention (especially according to the second group of embodiments of the present invention), that the user equipment indicates, to the at least one base station entity, a buffer status report, BSR, information, wherein the indication information and/or the further indication information is part of the buffer status report, BSR, information, wherein especially the buffer status report, BSR, information comprises - besides the indication information, or besides the indication information and the further indication information - at least one user plane buffer indication information related to the user plane and/or at least one control plane buffer indication information related to the control plane.

Thereby, it is advantageously possible, according to the present invention to efficiently indicate different pieces of information related to the buffer status of different communication planes.

Furthermore, it is also possible and preferred, according to the present invention (especially according to the second group of embodiments of the present invention), that the buffer status report, BSR, information indicates absolute or relative buffer sizes, or absolute or relative buffer size indications, related to
-- the additional communication plane,
-- the further additional communication plane,
-- the control plane and/or
-- the user plane,
wherein especially the buffer status report, BSR, information comprises absolute or relative buffer sizes, or absolute or relative buffer size indications, related to
-- one logical channel group or a plurality of logical channel groups of the user plane, and/or
-- one logical channel group or a plurality of logical channel groups of the additional communication plane and/or of the further additional communication plane.

Thereby, it is advantageously possible to efficiently and flexibly indicate buffer status information, e.g. according to one or a plurality of the following embodiments:
-- indication of absolute values of buffer sizes (i.e. indicating the respective data volume to be sent in uplink direction): {U: 100 MB | AIML: 10 MB | S: 1 MB | C: 0.1 MB}, i.e. meaning: user plane 100 MB, artificial intelligence/machine-learning plane 10 MB, service plane 1 MB control plane 0.1 MB;
-- indication of the absolute value of the overall (or total) buffer size and indication of relative values (or fraction of the overall buffer size) for the individual communication planes: {Total 111.1 MB - U88 | AIML10 | S1 | C0.15}%, i.e. meaning: the total size of all buffers is 111.1 MB, from which the user plane buffer is 88%, the artificial intelligence/machine-learning plane buffer is 10%, the service plane buffer 1% and the control plane buffer is 0.15%.

Further alternative embodiments can, e.g., use bit matrix to indicate the fraction or total amount.

Still furthermore, it is also possible and preferred, according to the present invention (especially according to the second group of embodiments of the present invention), that the buffer status report, BSR, information indicates - especially in addition to indicating absolute or relative buffer sizes, or absolute or relative buffer size indications
- importance information and/or priority information and/or criticality information of the data in the respective buffers,
wherein especially the importance information and/or priority information and/or criticality information are transmitted by means of in-band signaling as part of the buffer status report, BSR, information.

Thereby, it is advantageously possible to efficiently and flexibly indicate further information regarding the most appropriate handling of different kinds of data (being associated to different communication planes) and, hence, provide for an improved communication or use of the user equipment with the mobile communication network.

Furthermore, the present invention relates to a user equipment for being used with a mobile communication network and/or for transmitting data on, or using, an additional communication plane besides the control plane and the user plane, the user equipment being served by at least one base station entity of a radio access network of the mobile communication network, wherein the user equipment is configured to indicate, to the mobile communication network and/or to the at least one base station entity, the transmission of data or the intended transmission of data on, or using, the additional communication plane, this transmission or intended transmission of data being in uplink direction, from the user equipment towards the mobile communication network,
wherein the user equipment is configured such as to transmit an indication information that specifies, relates to, or indicates the use of, the additional communication plane, wherein the indication information is part of, or carried by, at least one medium access control sub protocol data unit, MAC subPDU, and/or at least one medium access control, MAC, control element and/or at least one medium access control, MAC, subheader.

Still furthermore, the present invention relates to a system or mobile communication network for using a user equipment with the mobile communication network and/or for transmitting data on, or using, an additional communication plane besides the control plane and the user plane, wherein the mobile communication network comprises a radio access network comprising at least one base station entity serving the user equipment, and wherein the user equipment is configured to indicate, to the mobile communication network and/or to the at least one base station entity, the transmission of data or the intended transmission of data on, or using, the additional communication plane, this transmission or intended transmission of data being in uplink direction, from the user equipment towards the mobile communication network,
wherein the system or mobile communication network is configured such that the user equipment transmits an indication information that specifies, relates to, or indicates the use of, the additional communication plane, wherein the indication information is part of, or carried by, at least one medium access control sub protocol data unit, MAC subPDU, and/or at least one medium access control, MAC, control element and/or at least one medium access control, MAC, subheader.

Additionally, the present invention relates to a program comprising a computer readable program code, which, when executed on a computer and/or on a user equipment and/or on a network node of a mobile communication network, especially at least one base station entity, or in part on a user equipment and/or in part on the network node of the mobile communication network, especially at least one base station entity, causes the computer and/or the user equipment and/or the network node of the mobile communication network, especially the at least one base station entity, to perform the inventive method.

Still additionally, the present invention relates to a Computer-readable medium comprising instructions which when executed on a computer and/or on a user equipment and/or on a network node of a mobile communication network, especially at least one base station entity, or in part on a user equipment and/or in part on the network node of the mobile communication network, especially at least one base station entity, causes the computer and/or the user equipment and/or the network node of the mobile communication network, especially the at least one base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates the situation of a user equipment in a mobile communication network comprising two base station entities, one of which is serving the user equipment, thus involving data being transmitted both in uplink direction and in downlink direction.
Figure 2 schematically and exemplarily illustrates primarily the communication between the user equipment and the serving base station entity and/or between the user equipment and the mobile communication network, using - besides the control plane and the user plane - at least one additional communication plane; in the exemplary situation represented in Figure 2, both the additional communication plane as well as the further additional communication plane are schematically shown.
Figures 3 to 5 schematically and exemplarily illustrate different versions or alternatives of the MAC control element BSR carrying BSR information.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

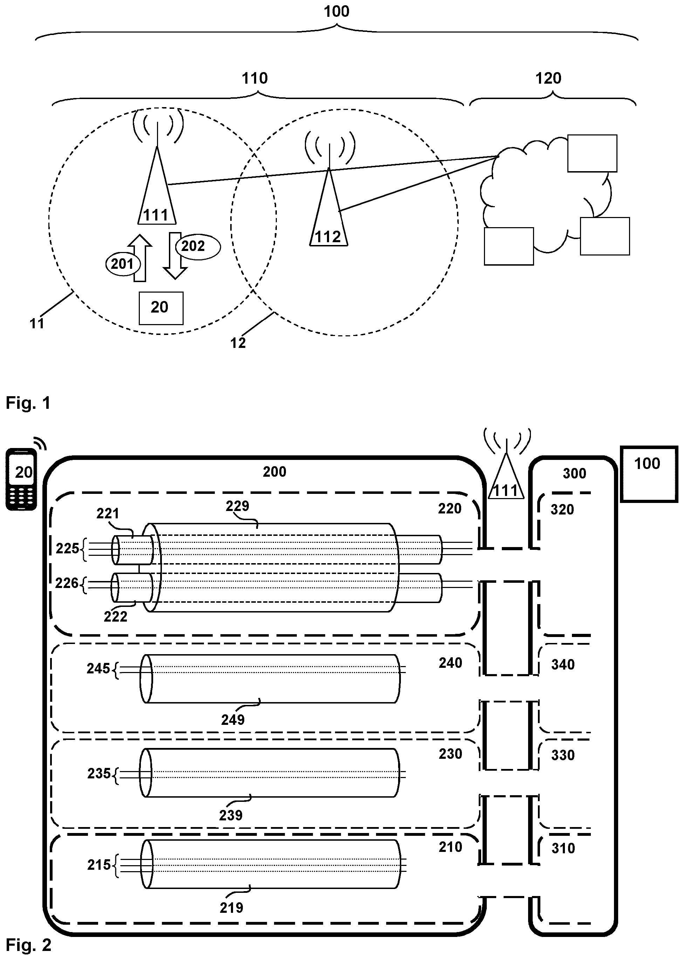

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. The access network 110 or radio access network 110 comprises a plurality of radio cells 11, 12, i.e. geographical areas served, respectively, by base station entities. In the exemplary situation or scenario shown in Figure 1, a first base station entity 111 generates or is associated with or spans the first (terrestrial) radio cell 11, and a second base station entity 112 generates or is associated with or spans the second (terrestrial) radio cell 12 (the first and second (terrestrial) radio cells 11, 12 being represented, in Figure 1, by means of dashed circles around the first and second base station entity 111, 112, respectively). The first and second base station entity 111, 112 typically realize gNB functionality or next-generation gNB functionality. The mobile communication network 100 is typically connected to a user equipment 20 (or, rather, the user equipment 20 is connected to the telecommunications network 100). In the exemplary situation represented in Figure 1, the user equipment 20 is schematically shown as being served by the first base station entity 111, involving uplink data 201 being transmitted in uplink direction (i.e. by the user equipment 20 towards its serving base station entity, exemplarily being represented as the first base station entity 111), and involving downlink data 202 being transmitted in downlink direction (i.e. by the serving base station entity 111 towards the user equipment 20).

In Figure 2, the communication between the user equipment 20 and the serving base station entity 111 and/or between the user equipment 20 and the mobile communication network 100, using - besides the control plane 210/310 and the user plane 220/320 - at least one additional communication plane 230/330 is schematically shown. In the exemplary situation represented in Figure 2, both the additional communication plane 230/330 as well as a further additional communication plane 240/340 are schematically shown.
The communication planes realized (or used) solely between the user equipment 20 and its serving base station entity (typically a gNodeB or next-generation gNodeB) 111 are designated, in Figure 2, by means of the following reference signs: 210 for the control plane, 220 for the user plane, 230 for the additional communication plane, and (as Figure 2 exemplarily shows an embodiment with still another additional communication plane) 240 for the further additional communication plane. Regarding the control plane 210/310, this communication between the user equipment 20 and its serving base station entity 111 primarily refers to AS (access stratum) communication, i.e. control information exchanged between the user equipment 20 and its serving base station entity 111 constituting the respective endpoints (or intended recipients) of that communication. Regarding the user plane 220, this communication between the user equipment 20 and its serving base station entity 111 might be less numerous or important).
Furthermore, in addition to the communication (more or less exclusively) between the user equipment 20 and its serving base station entity 111, Figure 2 also hints at communication between the user equipment 20 and (directly) the mobile communication network 100 (or, rather, the core network 120 of the mobile communication network 100), i.e. using the base station entity 111 only as a relay or an entity that (more or less transparently) forwards incoming uplink traffic to the mobile communication network 100 and incoming downlink traffic to the user equipment 20. Also in this communication (and again besides the control plane and the user plane), at least one additional communication plane is able to exist according to the present invention. The communication planes present (or realized) between the user equipment 20 and the mobile communication network 100 (or, rather, its core network 120) - via the base station entity 111 serving the user equipment 20 - are designated, in Figure 2, by means of the following reference signs: 210/310 for the control plane, 220/320 for the user plane, 230/330 for the additional communication plane, and (as Figure 2 exemplarily shows an embodiment with still another additional communication plane) 240/340 for the further additional communication plane. Regarding the control plane 210/310, this communication between the user equipment 20 and the mobile communication network 100 primarily refers to NAS (non-access stratum) communication, i.e. control information exchanged between the user equipment 20 and the mobile communication network 100 (or, some network function or service of its core network 120) constituting the respective endpoints (or intended recipients) of that communication.
Regarding the user plane 220, this communication between the user equipment 20 and the mobile communication network 100 corresponds to the major part of the user plane communication.
As it is the case in conventional mobile communication networks with respect to the control plane 210/310 and the user plane 220/320 respectively, these communication planes comprise parts (or 'legs') thereof in order to realize the respective communication needs, i.e. a first leg 210 of the control plane210/310 and a first leg 220 of the user plane 220/320 between the user equipment 20 and the base station entity 111, respectively. For the communication between the user equipment 20 and the mobile communication network 100, on the control plane 210/310, a second leg 310 needs additionally to be used between the base station entity 111 and the mobile communication network 100 (and, likewise, a second leg 320 on the user plane 220/320).

According to the present invention and in a manner analogous to the control and user planes 210/310, 220/320, it is preferred that also the additional communication plane 230/330 comprises a first leg 230 between the user equipment 20 and its serving base station entity 111 and a second leg 330 between the base station entity 111 and the mobile communication network 100. Regarding communication needs between the user equipment 20 and its serving base station entity 111, only the first leg 230 of the additional communication plane 230/330 would be used whereas communication needs requiring communication between the user equipment 20 and the mobile communication network 100, both the first and second legs 230, 330 of the additional communication plane 230/330 are used. Similarly, if present, the further additional communication plane 230/330 would comprise a first leg 240 between the user equipment 20 and its serving base station entity 111 and a second leg 340 between the base station entity 111 and the mobile communication network 100, and also the further additional communication plane 230/330 would be used analogously regarding different communication needs.
In combination, the first legs 210, 220, 230, 240 are schematically put together as reference sign 200, i.e. regarding the interface (or, rather, different interfaces, i.e. on the different communication planes) between the user equipment 20 and its serving base station entity 111, and the second legs 310, 320, 330, 340 are put together as reference sign 300, i.e. regarding the interface (or, rather, different interfaces, i.e. on the different communication planes) between the base station entity 111 and the mobile communication network 100.

In Figure 2 and for the sake of simplicity, mainly the 'first legs' 210, 220, 230, 240 of the different communication planes 210/310, 220/320, 230/330, 240/340 are shown in more detail. Schematically, the first leg 210 of the control plane 210/310 is shown as comprising a radio bearer 219 that comprises a plurality of (in the example three) logical (control plane) channels 215. The first leg 220 of the user plane 220/320 is shown as comprising a radio bearer 229 that comprises a plurality of (in the example two) logical channel groups LCG 221, 222, each thereof comprising a plurality of logical (user plane) channels 225, 226. The first leg 230 of the additional communication plane 230/330 is shown as comprising a radio bearer 239 that comprises a plurality of (in the example two) logical (additional communication plane) channels 235, and the first leg 240 of the further additional communication plane 240/340 is shown as comprising a radio bearer 249 that comprises a plurality (in the example, two) of logical (additional communication plane) channels 245.

By means of introducing, according to the present invention, the additional communication plane (especially an artificial intelligence/machine-learning (communication) plane) and/or (at least) the further additional communication plane (especially a service (communication) plane), it is advantageously possible (especially according to the first group of embodiments of the present invention) to realize and enable communication that is more adapted and/or more appropriate - regarding at least one parameter or dimension, but preferably regarding a plurality of different parameters or dimensions, that affect(s) or is/are involved in such communication - regarding the use of the user equipment 20 with the mobile communication network 100, especially for specific categories of data or for specific kinds of data.

For example, regarding charging, a differentiated (i.e. more appropriate) charging is quite easily possible according to the present invention: The actual transfer of data from the different communication planes is described in the form of using "containers" as the minimum data volume granularity in cellular networks, which "contains" are in fact individual transport blocks or MAC PDUs (MAC protocol data units), i.e. chunks (or packets) of data transmitted on (or relating to) the MAC layer of the respective considered radio access technology protocol stack. Regarding data that goes in the uplink direction via a single PUSCH ("Physical Uplink Shared Channel"), the base station entity 111 or gNB will have allocated uplink resources for the individual user equipment 20 to send data on the PUSCH.
In order to distinguish the different (communication) planes for the data according to the present invention, each container / transport block or MAC PDU (MAC protocol data unit) must indicate the (its) associated (communication) plane.
This done, exemplarily, according to the present invention, by means of using a header field (i.e. by introducing a new header field) for each transport block or MAC PDU consisting, but not limited to, two bits to indicate the respective plane out of the - in the example of Figure 2 - four communication planes 210/310, 220/320, 230/330, 240/340 (e.g. the exemplary coding of the two bits header field would be "00" for the control plane, "01" for the user plane, "10" for the artificial intelligence/machine-learning plane, and "11" for the service plane, but, of course, different assignments are possible as well.
While this method is mainly targeted to the uplink, it can consistently also be used for the downlink (then the aspect of charging is not relevant as the network has all respective information already) for user equipment internal distribution of the received data (instead of data coming from the fixed mapping of respective user and control plane channels.

Regarding uplink communication, the base station entity 111 or gNB receives the respective transport blocks or MAC PDUs and can use the header information for internal prioritization, routing and nonetheless the charging or charging avoidance handling. E.g. transport blocks or MAC PDUs of the control plane 210/310 and the artificial intelligence/machine-learning plane 230/330 would not be counted for customer charging, user plane transport blocks or MAC PDUs classically would go into the counting for customer charging and service plane transport blocks or MAC PDUs could go into a differentiated charging mechanism, e.g. charging the events of receiving service plane transports blocks or MAC PDUs rather than the data volume of the transport block/MAC PDU.

An example of how the indication information (or the further indication information) - i.e. indicating the transmission of data on, or using, the additional or further additional communication plane 230/330, 240/340 - is able to be realized or configured as part of the LCID information, i.e. as an LCID value, is given in the following table that is analogous to table 6.2.1-2 of TS 38.321 for NR as radio access technology that - according to the present invention - might be enhanced (by means of an introduction, such as e.g. by values 37 and 38 below, of new header indications based on the LCID values of NR, especially for UL-SCH when the LX field is not present or is set to 0), e.g., as follows:

| Codepoint/Index | LCID values |
|---|---|
| 0 | CCCH of size 64 bits, except for an (e)RedCap UE |
| 1-32 | Identity of the logical channel of DCCH and DTCH |
| 33 | Extended logical channel ID field (two-octet eLCID field) |
| 34 | Extended logical channel ID field (one-octet eLCID field) |
| 35 | CCCH of size 48 bits for a RedCap UE |
| 36 | CCCH of size 64 bits for a RedCap USER EQUIPMENT |
| 37 | AI-Plane channel indication |
| 38 | S-Plane channel indication |
| 37-42 | Reserved |
| 43 | Truncated Enhanced BFR (one octet Ci) |
| 44 | Timing Advance Report |
| 45 | Truncated Sidelink BSR |
| 46 | Sidelink BSR |
| 47 | Reserved |

(...to be continued as in table 6.2.1-2 of TS 38.321 for NR).

By means of introducing, according to the present invention, the additional communication plane (especially an artificial intelligence/machine-learning (communication) plane) and/or (at least) the further additional communication plane (especially a service (communication) plane), it is advantageously possible (especially according to the second group of embodiments of the present invention) to realize and enable communication that is more adapted and/or more appropriate - regarding at least one parameter or dimension, but preferably regarding a plurality of different parameters or dimensions, that affect(s) or is/are involved in such communication - regarding the use of the user equipment 20 with the mobile communication network 100, especially for specific categories of data or for specific kinds of data.

For example, regarding communication plane-individual buffer status reporting BSR, a differentiated (i.e. more appropriate) reporting is quite easily possible according to the present invention: The entire management of user plane data is based on the principle of the user equipment buffer status reporting (BSR), uplink grant request

(by the respective user equipment) and uplink grant indication to the various user equipments sharing the PUSCH ("Physical Uplink Shared Channel") under the control of the uplink scheduler in the base station entity or gNB. For the downlink, the data traffic for the different user equipments is buffered in different queues in the base station entity or gNB scheduler and depending on the scheduler design (e.g. taking data priority, data volume and RF channel conditions into account) the data is sent on the PDSCH ("Physical Downlink Shared Channel") addressing the individual user equipments. For the control plane messages, there is - in conventionally mobile communication networks - no concept of a "buffer status report" (BSR), but there are clearly defined rules that some messages can be sent immediately by the user equipment, while others are only triggered in response to a downlink control message of the base station entity or gNB. For the artificial intelligence/machine-learning plane 230/330 and the service plane 240/340 there is - in conventionally known mobile communication networks - no concept known.

According to the present invention (especially according to the second group of embodiments of the present invention), it is proposed to extend the concept of the "Buffer Status Report" (BSR) individually per plane beyond the user plane 220, 320 also for the artificial intelligence/machine-learning plane (additional communication plane) 230/330, the service plane (or further additional communication plane) 240/340 and, for future flexibility, also to the control plane 210/310.

One such exemplary embodiment thereof would be to introduce four different buffers and respective "Buffer Status Report" (BSR) procedures, each individually indicating the current buffer status (for each of the respective communication planes) in a manner like {U(ser): 100 MB | AIML: 10 MB | S(service): 1 MB | C(ontrol): 0.1 MB}.
A different embodiment could indicate the overall buffer status (as an absolute value and assumed to correspond to "100%") and, additionally, indicate the respective fraction (e.g. in percent) of each communication plane like {Total 111,1 MB - U(ser): 88 | AIML: 10 | S(ervice): 1 | C(ontrol): 0.15}%.
Further alternative embodiments might use bit matrix to indicate the fraction or total amounts.
Typically, the communication plane-individual BSRs are built upon (or: are structured analogously to ) the BSR used in 5G NR radio access technology which is per logical channel group (e.g. Figure 2 schematically shows the user plane 220/320 with multiple (five) logical channels 225, 226 in two logical channel groups 221, 222). Thus the communication plane-individual BSRs of the additional communication plane, the further additional communication plane, the service plane and/or the control plane could also be organized per logical channel group or, alternatively, per logical channel. E.g. in the example represented in Figure 2, the specific BSR for the additional communication plane (artificial intelligence/machine-learning plane) 230/330 is shown with only one logical channel 235 (but it could be multiple reusing the logical channel group (LCG) principle), and the specific BSR for the further additional communication plane (service plane) 240/340 is likewise shown with only one logical channel 245 (but, again, it could be multiple reusing the logical channel group (LCG) principle).

As a further improvement of the proposed method, the BSR of the individual planes, here especially the newly introduced artificial intelligence/machine-learning and service planes 230/330, 240/340, it is proposed to add information per BSR on the "importance"/"priority"/"criticality" of the data in the buffer. For the user plane 220/320 such information is inherently available to the base station entity/gNB 111 from the different logical channels as each logical channel can be mapped to different radio bearers which in turn is mapped to QoS-Flows with different QoS profiles (5CI). According to specific embodiments of the present invention, it is proposed to use inband signaling as part of the BSR or the BSR header information. Further, another classification of the "type of Al-/S- Data" could be introduced as part of this concept, which in turn allows the gNB to use this additional information in the data handling in terms of radio resource allocation. E.g. depending on the priority and type of data earlier or later allocation of UL radio resources for the UE after receiving the specific BSR can be realized by the gNB (scheduler).

According to an especially preferred embodiment (especially of the second group of embodiments of the present invention), it is preferred that the buffer status report, BSR, information indicates - especially in addition to indicating absolute or relative buffer sizes, or absolute or relative buffer size indications - importance information and/or priority information and/or criticality information of the data in the respective buffers (especially the importance information and/or priority information and/or criticality information are transmitted by means of in-band signaling as part of the buffer status report, BSR, information). This information carried by the (newly introduced) BSRs (i.e. the BSR information that comprises the indication information (relative to the additional communication plane 230/330) and/or the further indication information (relative to the further additional communication plane 240/340)) thus is able to be complemented with additional information that can also be used for routing purposes of the base station entity or gNB 111 towards the core network 120, i.e. for providing indications how the base station entity or gNB 111 should route the respective information towards the core network.

On the different (additional) communication planes, a plurality of different kinds or categories of data can be transported.
Examples for the artificial intelligence/machine-learning plane 230/330 or data thereof (which especially uses the (new specific) BSR information according to the present invention could, e.g., be artificial intelligence model training data to be sent from the user equipment 20 to the mobile communication network 100 for artificial intelligence model training - in the downlink, it could be used separately to the user plane plane for updating the artificial intelligence model in the user equipment 20. Such information is normally not very critical - especially time critical - and does, typically, not need to be transferred in real time. It is needed to empty the user equipment buffer at a certain point in time to make the collected information available to the network for further processing. Typically, such data has the lowest priority over radio resource control RRC/non-access stratum NAS control-plane signaling and also user plane data, which needs to fulfill the QoS demands in order to not negatively impact the user or service experience.
Examples for the service plane 240/340, e.g., could include location based service/positioning-related information flows, but also data needed for user equipment-based integrated sensing and communication (ISAC) which is captured by the user equipment and send to postprocessing to the network. Also, for the service plane, the data transferred should be separated from the user-plane traffic to not be counted on the user data volume (for charging). Again, such information is normally less critical (than, e.g., control plane signaling such as radio resource control or non-access stratum messages) and does not necessarily need to be transferred in real time. It is, e.g., needed to allow for example the transfer of sensing data in case of user equipment sensing, where the collected raw data or information needs to be available to the network shortly after capturing (for further processing, e.g. determination of environment around a (moving) UE which sensed the environment, but cannot do the data processing). Typically, such data has lower priority over radio resource control RRC/non-access stratum NAS control-plane signaling and also realtime user plane data, which needs to fulfill the QoS demands in order to not negatively impact the user or service experience but might be far more time critical than artificial intelligence/machine-learning plane traffic. Depending on the use case, it might also be the case that the service plane data is not time critical at all, e.g. for long term user equipment-based environmental sensing. Thus, the present invention provides a flexible yet effective solution to potentially address a multitude of different network services.

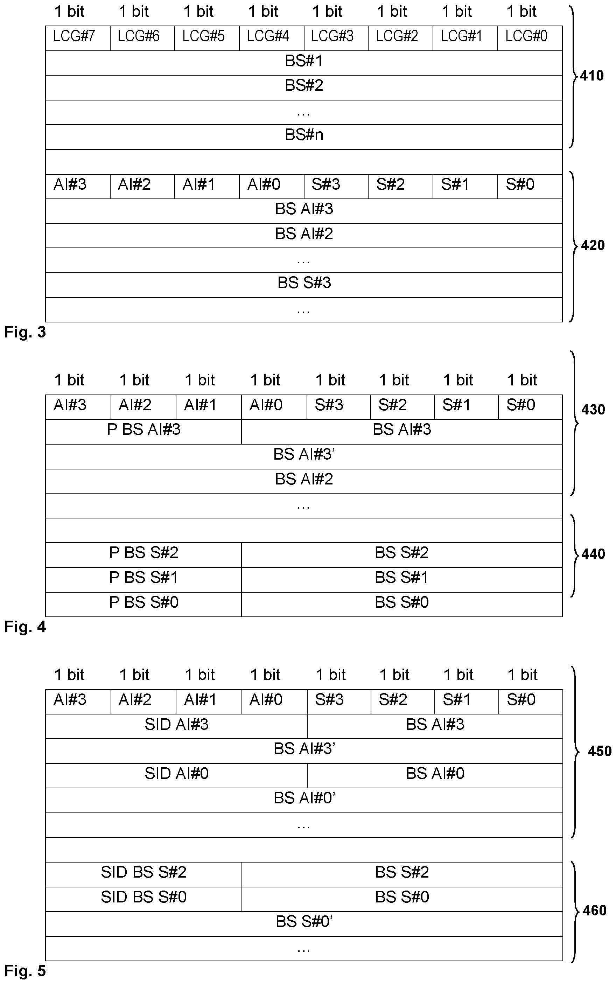

This is exemplarily and schematically shown in Figures 3 to 5 that illustrate different versions or alternatives of the MAC control element BSR carrying the BSR information:

Figure 3 exemplarily shows an extension of the MAC control element BSR (that is used, according to the 5G NR radio access technology, to indicate buffer status indication regarding different logical channel groups). The conventionally known MAC control element BSR used according to 5G NR is designated, in Figure 3, by reference sign 410. It represents a certain number of bytes (cf. eight times the indication "1bit" above the table) that collectively represent or make up the MAC control element BSR. In a first byte, also called indication byte, the logical channel groups (cf. "LCG#7" to "LCG#0") are indicated, or, rather, it is indicated (by means of single bits being represented by "LCG#n", n being an integer from, e.g., 0 to 7) whether or not respective buffer status indications ("BS#n") are indicated by means of one of the following bytes.

According to an embodiment of the present invention, the MAC control element BSR that the user equipment 20 is transmitting to the base station entity 111 - especially besides the MAC control element BSR 410 that is used according to 5G NR - comprises the buffer status report, BSR, information (indicated by means of reference sign 420) related to the additional communication plane (artificial intelligence/machine-learning plane) 230/330 and related to the further additional communication plane (service plane) 240/340 corresponds to the enhancement for the MAC BSR (e.g. in a 6G radio access technology system) according to the proposed method to apply BSR information for artificial intelligence/machine-learning and service planes.

This buffer status report, BSR, information 420, e.g., comprises an indication byte and buffer status information, wherein the indication byte indicates (again, e.g., by means of single bits being represented in Figure 3 by "S#n", n being an integer from, e.g., 0 to 3 and "S#m", m being an integer from, e.g., 0 to 3) which logical channel groups or which logical channels of the additional communication plane 230/330 (cf. "Al#n") and/or of the further additional communication plane 240/340 (cf. "S#n") will follow in subsequent bytes, these bytes being indicated, in Figure 3, by "BS Al#n" or by "BS S#m" as part of the buffer status report, BSR, information 420.

Figures 4 and 5 exemplarily show variations of or alternatives to (cf. reference signs 430, **440,** 450, 460) the buffer status report, BSR, information 420 of Figure 3. Again, these variations or alternatives are structured according to an indication byte (first line above the table in Figures 4 and 5) and subsequent buffer status information, wherein the indication byte again indicates (e.g. by means of single bits "Al#n" or "S#m", n and m being integers from, e.g., 0 to 3) which logical channel groups or which logical channels of the additional communication plane 230/330 (cf. "Al#n") and/or of the further additional communication plane 240/340 (cf. "S#n") will follow in subsequent bytes. However, in contrast to the buffer status report, BSR, information 420 of Figure 3, according to the embodiments shown in Figures 4 and 5 not only the respective buffer status information (alone) is provided by subsequent bytes but also - at least for a part of the logical channel groups or logical channels - an indication regarding a priority information (cf. "P BS Al#n"/ "P BS S#m", reference signs 430, 440 in Figure 4) and/or an indication regarding a service ID information (cf. "SID BS Al#n" / "SID BS S#m", reference signs 450, 460 in Figure 5). In this respect, it is possible according to the present invention that some or all of the buffer status report, BSR, information is transmitted using not only one byte (that comprises the priority information or the service ID information) but also using the subsequent byte such that a continuation (cf. e.g. "BS AI#3'" in the byte after "BS AI#3" in reference sign 430, or "BS AI#0'" in the byte after "BS AI#0" in reference sign 450) of the buffer status report, BSR, information is possible by means of the subsequent byte.

Especially, according to the present invention, these alternative embodiments could also avoid to introduce individual BSR for the artificial intelligence/machine-learning plane and the service plane, but instead introduce a new stage of buffer report which reports the sum of buffers or buffer status of the U-/AI-/S-planes while indicating the relevant fractions and maintaining the fine grained BSR for the U-Plane as known from 5G.

## Claims

1. Method for using a user equipment (20) with a mobile communication network (100) and/or for transmitting data on, or using, an additional communication plane (230/330, 240/340) besides the control plane (210/310) and the user plane (220/320), wherein the mobile communication network (100) comprises a radio access network (110) comprising at least one base station entity (111) serving the user equipment (20), and wherein the user equipment (20) indicates, to the mobile communication network (100) and/or to the at least one base station entity (111), the transmission of data or the intended transmission of data on, or using, the additional communication plane (230/330, 240/340), this transmission or intended transmission of data being in uplink direction (201), from the user equipment (20) towards the mobile communication network (100),
wherein the method comprises the step of the user equipment (20) transmitting an indication information that specifies, relates to, or indicates the use of, the additional communication plane (230/330, 240/340), wherein the indication information is part of, or carried by, at least one medium access control sub protocol data unit, MAC subPDU, and/or at least one medium access control, MAC, control element and/or at least one medium access control, MAC, subheader.

2. Method according to claim 1, wherein the additional communication plane is, or corresponds to, an artificial intelligence/machine-learning plane (230/330) and/or is or corresponds to, a service plane (240/340),
wherein especially, the transmission or the intended transmission of further data on, or using, a further additional communication plane (240/340) - besides the additional communication plane (230/330) and besides both the control and user plane (210/310, 220/320) - is indicated, by the user equipment (20), wherein the additional communication plane is, or corresponds to, the artificial intelligence/machine-learning plane (230/330) and wherein the further additional communication plane is, or corresponds to, the service plane (240/340),
wherein especially, the user equipment (20) transmits a further indication information that specifies, relates to, or indicates the use of, the further additional communication plane.

3. Method according to one of the preceding claims, wherein the at least one serving base station entity (111) indicates to the user equipment (20), the transmission of downlink data (202) on, or using, the additional communication plane (230/330) and/or on, or using, the further additional communication plane (240/340),
wherein the method comprises the further step of the at least one base station entity (111) transmitting, and the user equipment (20) receiving, a downlink indication information that specifies, relates to, or indicates the use of, the additional communication plane (230/330) and/or a further downlink indication information that specifies, relates to, or indicates the use of, the further additional communication plane (240/340), wherein the downlink indication information and/or the further downlink indication information is part of, or carried by, at least one medium access control sub protocol data unit, MAC subPDU, and/or at least one medium access control, MAC, control element and/or at least one medium access control, MAC, subheader.

4. Method according to one of the preceding claims, wherein the indication information that specifies, relates to, or indicates the use of, the additional communication plane (230/330) and/or the further indication information that specifies, relates to, or indicates the use of, the further additional communication plane (240/340) corresponds to at least one of the following:
-- an information element, specifically indicating the use of the additional communication plane (230/330), especially as a specific value of the possible values as part of a logical channel identifier information, LCID,
-- a further information element specifically indicating the use of the further additional communication plane (240/340), especially as a further specific value of the possible values as part of a logical channel identifier information, LCID,
-- an information element specifically indicating the use of either the control plane (210/310), the user plane (220/320), the additional communication plane (230/330), or the further additional communication plane (240/340), especially as part of a logical channel identifier information, LCID, and/or especially as a two bit indication, especially as part of a header part or of a subheader part or of a control element part of a medium access control sub protocol data unit, MAC subPDU.

5. Method according to one of the preceding claims, wherein the downlink indication information that specifies, relates to, or indicates the use of, the additional communication plane (230/330) and/or the further downlink indication information that specifies, relates to, or indicates the use of, the further additional communication plane (240/340) corresponds to at least one of the following:
-- a downlink information element, specifically indicating the use of the additional communication plane (230/330), especially as a specific value of the possible values as part of a logical channel identifier information, LCID,
-- a further downlink information element specifically indicating the use of the further additional communication plane (240/340), especially as a further specific value of the possible values as part of a logical channel identifier information, LCID,
-- a downlink information element specifically indicating the use of either the control plane (210/310), the user plane (220/320), the additional communication plane (230/330), or the further additional communication plane (240/340), especially as part of a logical channel identifier information, LCID, and/or especially as a two bit indication, especially as part of a header part or of a subheader part or of a control element part of a medium access control sub protocol data unit, MAC subPDU.

6. Method according to one of the preceding claims, wherein the user equipment (20) indicates, to the at least one base station entity (111),
-- the intended transmission of data on, or using, the additional communication plane (230/330) by means of transmitting the indication information that specifies, relates to, or indicates the use of, the additional communication plane (230/330), the indication information especially relating to the data volume or buffer size of the data intended to be transmitted by the user equipment (20), and/or
-- the intended transmission of further data on, or using, the further additional communication plane (240/340) by means of transmitting the further indication information that specifies, relates to, or indicates the use of, the further additional communication plane (230/330), the further indication information especially relating to the data volume or buffer size of the further data intended to be transmitted by the user equipment (20).

7. Method according to one of the preceding claims, wherein the user equipment (20) indicates, to the at least one base station entity (111), a buffer status report, BSR, information, wherein the indication information and/or the further indication information is part of the buffer status report, BSR, information, wherein especially the buffer status report, BSR, information comprises - besides the indication information, or besides the indication information and the further indication information - at least one user plane buffer indication information related to the user plane and/or at least one control plane buffer indication information related to the control plane.

8. Method according to one of the preceding claims, wherein the buffer status report, BSR, information indicates absolute or relative buffer sizes, or absolute or relative buffer size indications, related to
-- the additional communication plane (230/330),
-- the further additional communication plane (240/340),
-- the control plane (210/310) and/or
-- the user plane (220/320),
wherein especially the buffer status report, BSR, information comprises absolute or relative buffer sizes, or absolute or relative buffer size indications, related to
-- one logical channel group or a plurality of logical channel groups of the user plane (220/320), and/or
-- one logical channel group or a plurality of logical channel groups of the additional communication plane (230/330) and/or of the further additional communication plane (240/340).

9. Method according to one of the preceding claims, wherein the buffer status report, BSR, information indicates - especially in addition to indicating absolute or relative buffer sizes, or absolute or relative buffer size indications - importance information and/or priority information and/or criticality information of the data in the respective buffers,
wherein especially the importance information and/or priority information and/or criticality information are transmitted by means of in-band signaling as part of the buffer status report, BSR, information.

10. User equipment (20) for being used with a mobile communication network (100) and/or for transmitting data on, or using, an additional communication plane (230/330, 240/340) besides the control plane (210/310) and the user plane (220/320), the user equipment (20) being served by at least one base station entity (111) of a radio access network (110) of the mobile communication network (100), wherein the user equipment (20) is configured to indicate, to the mobile communication network (100) and/or to the at least one base station entity (111), the transmission of data or the intended transmission of data on, or using, the additional communication plane (230/330, 240/340), this transmission or intended transmission of data being in uplink direction (201), from the user equipment (20) towards the mobile communication network (100),
wherein the user equipment (20) is configured such as to transmit an indication information that specifies, relates to, or indicates the use of, the additional communication plane (230/330, 240/340), wherein the indication information is part of, or carried by, at least one medium access control sub protocol data unit, MAC subPDU, and/or at least one medium access control, MAC, control element and/or at least one medium access control, MAC, subheader.

11. System or mobile communication network (100) for using a user equipment (20) with the mobile communication network (100) and/or for transmitting data on, or using, an additional communication plane (230/330, 240/340) besides the control plane (210/310) and the user plane (220/320), wherein the mobile communication network (100) comprises a radio access network (110) comprising at least one base station entity (111) serving the user equipment (20), and wherein the user equipment (20) is configured to indicate, to the mobile communication network (100) and/or to the at least one base station entity (111), the transmission of data or the intended transmission of data on, or using, the additional communication plane (230/330, 240/340), this transmission or intended transmission of data being in uplink direction (201), from the user equipment (20) towards the mobile communication network (100),
wherein the system or mobile communication network (100) is configured such that the user equipment (20) transmits an indication information that specifies, relates to, or indicates the use of, the additional communication plane (230/330, 240/340), wherein the indication information is part of, or carried by, at least one medium access control sub protocol data unit, MAC subPDU, and/or at least one medium access control, MAC, control element and/or at least one medium access control, MAC, subheader.

12. Program comprising a computer readable program code, which, when executed on a computer and/or on a user equipment (20) and/or on a network node of a mobile communication network (100), especially at least one base station entity (111), or in part on a user equipment (20) and/or in part on the network node of the mobile communication network (100), especially at least one base station entity (111), causes the computer and/or the user equipment (20) and/or the network node of the mobile communication network (100), especially the at least one base station entity (111), to perform a method according to one of claims 1 to 9.

13. Computer-readable medium comprising instructions which when executed on a computer and/or on a user equipment (20) and/or on a network node of a mobile communication network (100), especially at least one base station entity (111), or in part on a user equipment (20) and/or in part on the network node of the mobile communication network (100), especially at least one base station entity (111), causes the computer and/or the user equipment (20) and/or the network node of the mobile communication network (100), especially the at least one base station entity (111), to perform a method according to one of claims 1 to 9.
